# EUROPEAN PATENT APPLICATION

(11) **EP 1 245 765 A1**
(43) Date of publication of application: **02.10.2002**
(21) Application number: 02252343.5
(22) Date of filing: 28.03.2002
(51) Int. Cl.: E05B 65/46

(54) **Cabinet having double locking mechanism**

(30) Priority: 30.03.2001 KR 2001016863
(71) Applicant: FL Technology Inc., Gangseo-gu, Seoul (KR)
(72) Inventor: Kim, Dong-gyun, Guro-gu, Seoul (KR)
(74) Representative: Ertl, Nicholas Justin

(57) **Abstract**

In a cabinet having a double locking mechanism, a cabinet has a case (12), an ejection portion (18) installed to be capable of being ejected from the inside of the case (12) and on which various devices can be mounted, and a door (14) sealing the case, so that the door can be locked to the ejection portion (18) and the door locked to the ejection portion is locked to the case (12). Thus, since the case can only be opened by an authorized person, the cabinet is safe.

## Description

The present invention relates to a cabinet having a case, an ejection portion installed to be capable of being ejected from the inside of the case and on which various devices can be mounted, and a door sealing the case.

For example, a housing for a public telephone includes a case accommodating various electronic parts therein and a door pivoting around the case for sealing the case. The electronic parts included in the case are mostly supported at the inner wall surface of the case and some are installed deep in the case.

When the electronic parts need repair and the electronic parts to be repaired are installed near the case, there will be no difficulty in repairing them. However, if the electronic parts are located deep in the case, the space for repair is restricted. Thus, since the electric parts cannot be repaired at their installed positions, they need to be pulled out of the case to repair.

Also, even when the door is locked to the case, anyone who intends to open the case can easily unlock the door by inserting a similar shaped key or wire into a key hole positioned at the side wall of the case and manipulating it.

According to the invention, there is provided a cabinet having a double locking mechanism comprising a case having a space portion therein, in which one side portion thereof is open to the outside, an elevation portion installed at side walls in the case facing each other and having at least one hook unit provided thereon, an opening unit connected to the elevation portion in a state of being supported at one side wall of the case, for moving the elevation portion upward, a locking unit installed at one side wall of the case, for preventing the upward movement of the elevation portion, an ejection portion accommodated in the case to be capable of ejection from the case by way of a sliding movement, and a door hinge-coupled to the ejection portion and covering the front surface of the ejection portion, sealing the case by moving toward the case together with the ejection portion in the state of covering the front surface of the ejection portion, and having a catching member provided on the inner surface thereof and coupled to the hook unit.

This cabinet design provides a safe cabinet having a double locking mechanism so that, in a cabinet having a case, an ejection portion installed to be capable of being ejected from the inside of the case and on which various devices can be mounted, and a door sealing the case, the door can be locked to the ejection portion and the door locked to the ejection portion can be locked to the case

An example of the invention will now be described with reference to the attached drawings in which:
FIG. 1 is a perspective view of a cabinet having a double locking mechanism according to a preferred embodiment, in which the cabinet is open;
FIG. 2 is a partially cut-away perspective view showing an elastic hook provided at a door in the cabinet having a double locking mechanism according to a preferred embodiment;
FIGS. 3, 4, and 5 are views showing the operation mechanism of the elastic hook;
FIG. 6 is an exploded perspective view for explaining a coupling method of a door with respect to a case in the cabinet having a double locking mechanism according to a preferred embodiment;
FIG. 7 is a perspective view showing part of a locking unit of FIG. 4;
FIG. 8 is a sectional view taken along line VIII-VIII of FIG. 4; and
FIGS. 9, 10, 11, and 12 are views showing a coupling method of a door with respect to a case in the cabinet having a double locking mechanism according to a preferred embodiment.

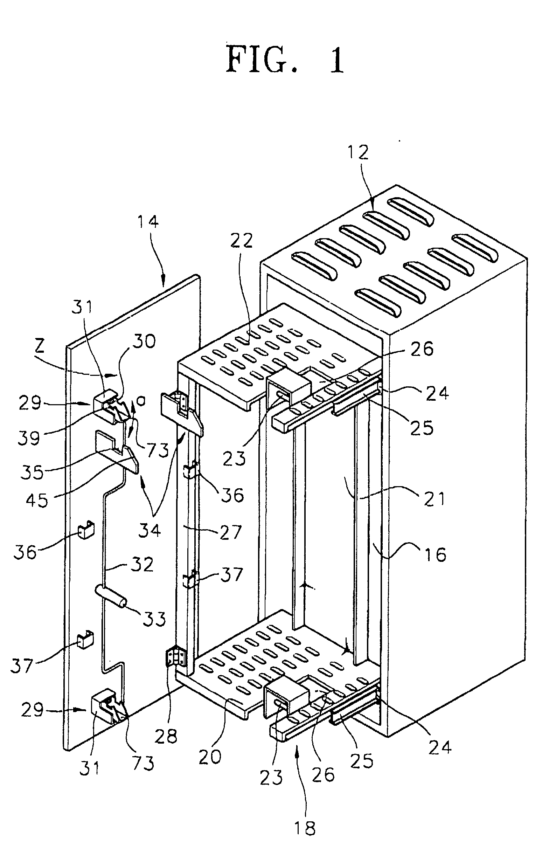

In this application, the term "double locking" means a locking between a door and a case and a locking between the door and an ejection portion. Referring to FIG. 1, a cabinet having a double locking mechanism according to the present invention includes a case 12 providing a space portion 16 inside the case 12 and having a pair of guide rails 24 fixed at upper and lower inner side surfaces, an ejection portion 18 capable of sliding along the guide rails 24 so as to be ejected from the inner space of the case or inserted in the inner space, a door 14 coupled to a hinge 28 at the front side portion of the ejection portion 18 to be capable of pivoting with respect to the ejection portion 18.

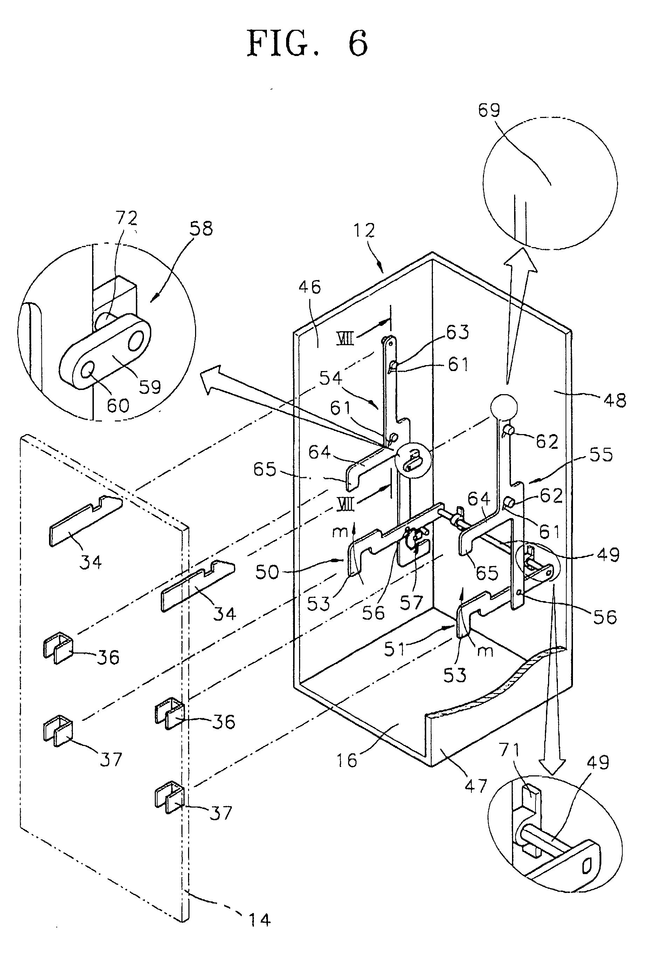

First and second elevation members 54 and 55 (refer to FIG. 6) elevating up and down are installed at the both side inner walls of the case 12, as shown in FIG. 6, which will be described later.

The case 12 can be modified to have various shapes according to preferred embodiments. Further, a hole for air exchange can be formed at an arbitrary position of the case 12 for the exchange of air in the case 12.

The ejection portion 18 includes an upper flat plate 22, a lower flat plate 20, and a vertical frame 21. The upper and lower flat plates 22 and 20 have the same shapes and separated a predetermined distance from each other in parallel so that various electronic parts or other necessary parts can be stably installed therebetween.

An extension member 25 is provided at both sides of the upper and lower flat plates 22 and 20 to be capable of sliding. The extension member 25 is capable of sliding with respect to the side portion of the upper and lower flat plates 22 and 20 and also capable of sliding with respect to the guide rail 24. This sliding method is well known, by which the upper and lower flat plates 22 and 20 can smoothly move with respect to the case 12.

The vertical frame 21 is a plate type frame for supporting the upper flat plate 22 by being separated a predetermined height from the lower flat plate 20. the vertical frame 21 is coupled to the rear end portions of the upper and lower flat plates 22 and 20 to secure the maximum space above the lower flat plate 20.

An installation space 26 having a predetermined width is provided at the front end portion of each of upper and lower flat plates 22 and 20. The installation space 26 is made by cutting each of the upper and lower flat plates 22 and 20 by predetermined width and length. A hook rod 23 is installed horizontally in the installation space 26. The hook rod 23 is a cylindrical rod and coupled to an elastic hook 29 to be described later and capable of rotating with respect to the upper and lower flat plates 22 and 20.

Also, a support column 27 is provided between the upper and lower flat plates 22 and 20. The support column 27 maintains a vertical height between the upper and lower flat plates 22 and 20 and support a structural strength. The support column 27 connects one corner of the front end portion of the upper flat plate 22 and one corner of the front end portion of the lower flat plate 20.

Two hinges 28 are fixed to the support column 27. The hinge 28 connects the door 14 with respect to the ejection portion 18. The door 14 coupled by means of the hinges 28 is capable of pivoting in a direction indicated by an arrow **z.**

The door 14 pivots toward the ejection portion 18 and couples to the ejection portion 18. In such a state, the door 14 is moved toward and thus coupled to the case 12, forming a seal. To realize the above operation, the elastic hook 29, a fixed hook 34, and catching members 36 and 37 are provided at the inner surface of the door 14.

The elastic hook 29 maintains a state of the door 14 coupled to the ejection portion 18 by being hooked by the hook rod 23. The elastic hook 29 is installed at two places on the door 14, that is, upper and lower positions corresponding to the hook rod 23. The upper elastic hook 29 is coupled to the hook rod 23 provided at the upper flat plate 22 and the lower elastic hook 29 is coupled to the hook rod 23 provided at the lower flat plate 20.

Each of the elastic hook 29 includes a hook housing 31, a hook member 73 capable of pivoting inside the hook housing 31 in a direction indicated by an arrow a, and a spring 30 for elastically supporting the leading end of the hook member 73 upward.

The hook housing 31 fixed to the inner side surface of the door 14 restricts the hook member 73 from pivoting in an upward direction. That is, the hook member 73 elastically supported upward by the spring 30 is prevented from pivoting over the horizontal plane. The hook member 73 is pin-coupled by a support shaft 40 inside the hook housing 31. An inclined surface 42 is formed at the leading end portion of the hook member 73 and a hook groove 39 is formed in the rear of the inclined surface 42. The inclined surface 42 is pushed downward by the hook rod 23 when the door 14 is coupled to the ejection portion 18. Also, the hook groove 39 is a portion into which the hook rod 23 is inserted when the door 14 is completed coupled to the ejection portion 18, which will be described in detail later.

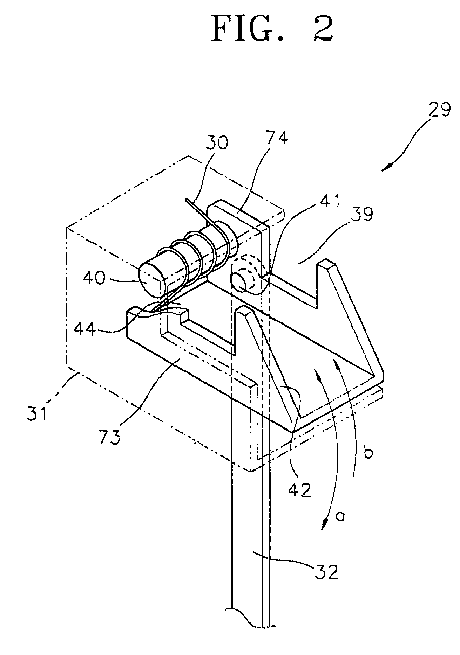

Also, as shown in FIG. 2, the spring 30 wound around the support shaft 40 elastically presses the rear end portion of the hook member 73 to elastically support the leading end portion of the hook member 73 in a direction indicated by an arrow b.

The upper and lower elastic hooks 29 are operated at the same time. That is, while the upper hook member 73 is coupled to the hook rod 23 of the upper flat plate 22, the lower hook member 73 is coupled to the hook rod 23 of the lower flat plate 20. Accordingly, to separated the upper and lower hook members 73 from the hook rod 23 at each of the upper and lower flat plates 22 and 20, the leading end portions of the upper and lower hook members 73 need to simultaneously pivot downward.

Referring to FIGS. 1 and 2, a connection rod 32 to separate the hook member 73 from the hook rod 23 is provided. The connection rod 32 is a control rod moved up and down by a user and a handle 33 is installed at the middle portion thereof. The upper and lower end portions of the connection rod 32 are connected to the hook member 73 by means of a connection pin 41.

Thus, when the handle 33 is moved downward, the leading end portion of the respective hook members 73 pivot downward overcoming an elastic force of the spring 30. When the force pressing the handle 33 is removed, the leading end portion of the hook member 73 is moved upward and returns to the original position by the elastic force of the spring 30. Here, a horizontal support surface 74 of the hook member 73 is restricted from further moving by the inner surface of the hook housing 31 so that the hook member 73 maintains in a horizontal direction.

The fixed hook 34 is formed of a pair of plate members extended perpendicularly from the inner surface of the door 14, in which an inclined surface 45 is formed at the leading end portion and a hook groove 35 is formed in the rear of the inclined surface 45.

When the door 14 approaches the case 12, the fixed hook 34 is moved toward the lower portion of an idle pin (69 of FIG. 6) provided at the upper end of each of the first elevation member (54 of FIG. 6) and the second elevation member (55 of FIG. 6) to be described later and then pushes the idle pin 69 upward so that the first and second elevation members 54 and 55 are moved upward and the idle pin 69 is accommodated in the hook groove 35.

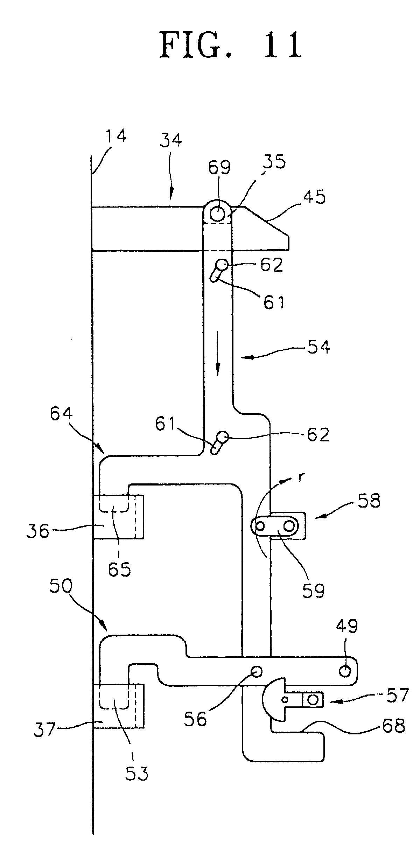

The fixed hook 34 is a flat plate having a predetermined thickness and the length of extension is designed such that, when the door 14 seals the case 12 as shown in FIG. 11, the idle pin 69 is inserted into the hook groove 35.

The catching members 36 and 37 fixed at the inner surface of the door 14 where the fixed hook 34 is fixed are portions where an elevation hook 64 of FIG. 6 and insertion portions 53 of first and second pivot hooks 50 and 51 of FIG. 6 which will be described later are inserted and caught. Each of the catching members 36 and 37 has a "Π" shaped profile. The catching member 36 fixed at the upper portion of the door 14 is coupled to the elevation hook 64 and the insertion member 37 provided at the lower portion of the door 14 is coupled to the first and second pivot hooks 50 and 51.

Thus, in the present invention, the door 14 is coupled to the ejection portion 18 by the elastic hook 29 and the hook rod 23. Also, the door 14 can be coupled to the case 12 by the fixed hook 34 and the idle pin 69, and the catching members 36 and 37 and the hooks 64, 50, and 51.

FIG. 2 shows the upper elastic hook of FIG. 1 provided at the door of a cabinet having a double locking mechanism according to a preferred embodiment of the present invention.

As shown in the drawing, the inclined surface 42 is formed at the leading end portion of the hook member 73 and the hook groove 39 is provided in the rear of the inclined surface 42. Also, the support shaft 40 is provided in the rear of the hook groove 39. The support shaft 40 is coupled to the hook housing 31 by penetrating the hook member 73 and supports the hook member 73 capable of pivoting in the direction **a** with respect to the hook housing 31. The hook groove 39 accommodates the hook rod 23.

The spring 30 elastically presses the hook member 73 in the direction **b** such that one end portion thereof presses a bottom surface 44 in the rear end of the hook member 73 and the other end portion presses the inner wall of the hook housing 31. That is, the spring 30 being supported by the hook housing 31 presses the rear end portion of the hook member 73.

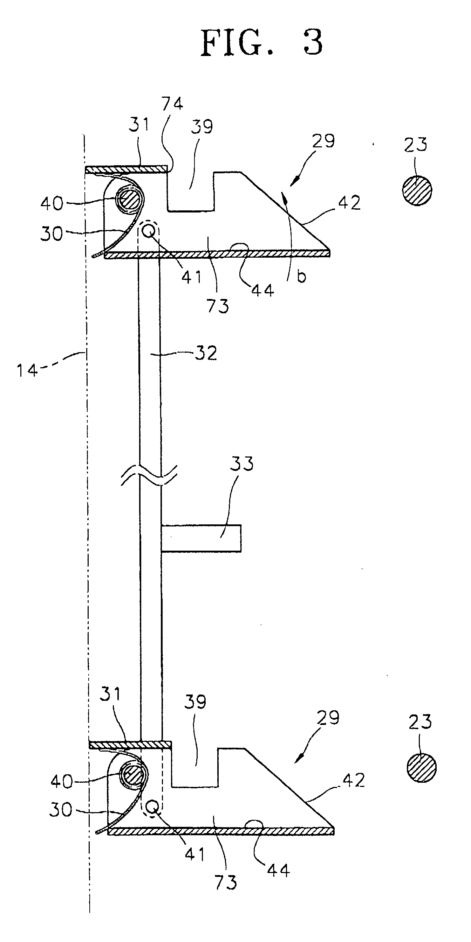

In the meantime, the horizontal support surface 74 is provided at the upper surface of the rear end portion of the hook member 73. The horizontal support surface 74 is processed to be flat horizontally and contacts the inner surface of the hook housing 31. Since the horizontal support surface 74 is supported by the inner surface of the hook housing 31, the angle of pivot of the hook member 73 in the upward direction is restricted so that the hook member 73 can be maintained horizontally as shown in FIG. 3.

FIGS. 3, 4, and 5 are views for explaining the operation mechanism of the elastic hook.

As shown in the drawings, the hook member 73 installed at each of the upper and lower of the door 14 is elastically supported by the spring 30 in the direction **b**. The horizontal support surface 74 of the hook member 73 is in contact with the lower surface of the hook housing 31. Also, the hook rod 23 provided at each of the upper and lower portions of the ejection portion 18 is disposed in front of the hook member 73.

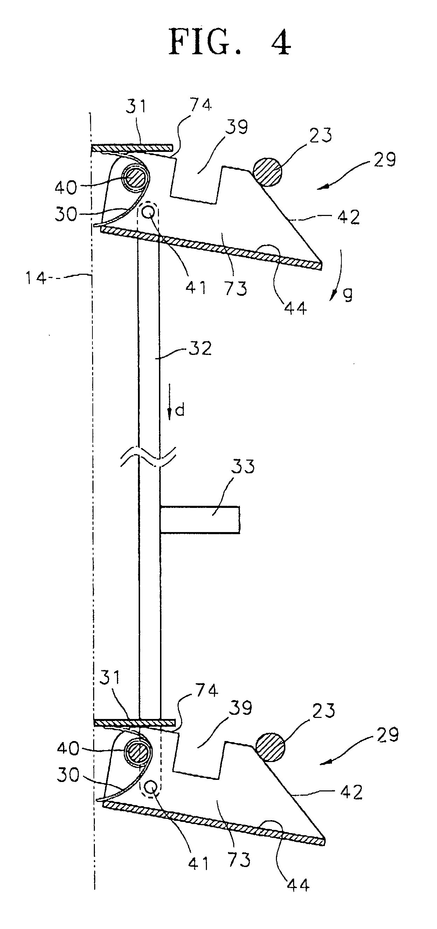

In this state, when the door 14 pivots toward the ejection portion 18 so that the elastic hook 29 is made close to the hook rod 23, as shown in FIG. 4, the inclined surface 42 of the hook member 73 contacts the lower portion of the hook rod 23 and is pushed downward by the hook rod 23, thus pivoting in a direction indicated by an arrow **g.** Here, the spring 30 is gradually compressed and the horizontal support surface 74 of the hook member 73 is separated at an angle from the bottom surface of the hook housing 31 and the connection rod 32 is moved downward along a direction indicated by an arrow **d**.

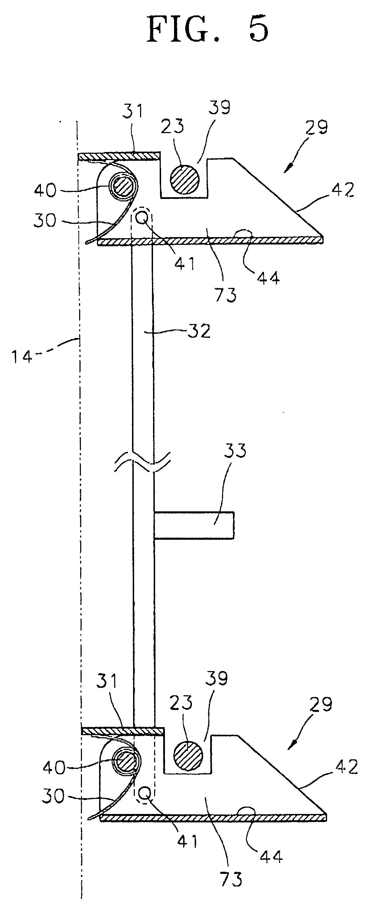

When the door 14 is continuously and completely pressed toward the ejection portion 18, as shown in FIG.5, the hook rod 23 is inserted into the hook groove 39 and then the hook member 73 pivots upward by a restoration force of the spring 30 to be maintained horizontally. As the hook rod 23 is inserted in the hook groove 39, the hook member 73 is maintained horizontally and thus the door 14 is completely coupled to the ejection portion 18.

In the above state, to separate the door 14 from the ejection portion, a path along which the hook rod 23 horizontally escapes from the hook groove 39 by pivoting the leading end portion of the hook member 73 downward must be secured. For this, the handle 33 of the connection rod 32 is moved downward.

As the handle 33 is moved downward, the leading end portion of the hook member 73 connected to the upper and lower end portions of the connection rode 32 by the connection pin 41 pivots downward and in such a state the door 14 is moved away from the hook rod 23.

Consequently, the door 14 is coupled to the ejection portion 18 by pressing the door 14 against the ejection portion 18, and the door 14 is separated from the ejection 18 by pulling the door 14 from the ejection 18 in the state in which the handle 33 is moved downward.

FIG. 6 is a view for explaining a coupling method between the door and the case in the cabinet having a double locking mechanism according to a preferred embodiment of the present invention.

Referring to the drawing, the first and second elevation members 54 and 55 are provided at both side walls 46 and 47 of the case 12. First and second pivot hooks 50 and 51 are provided at the lower portions of the first and second elevation members 54 and 55, respectively.

Basically, the first and second elevation members 54 and 55 are concurrently elevated. Ascending is realized by the fixed hook 34 or an opening unit 58 to be described later and descending is realized by the weight of each elevation member.

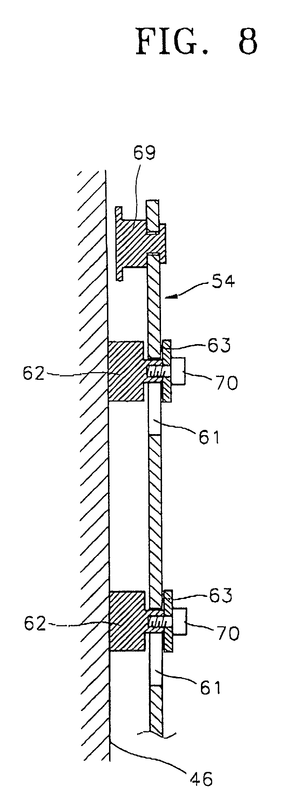

The first elevation member 54 is a plate member having a predetermined thickness and disposed parallel to the side wall 46 of the case 12. Slots 61 are formed at the upper portion and middle portion of the first elevation member 54. An elevation guide pin 62 is inserted in each slot 61. The elevation guide pin 62 is fixed to the side wall 46, as shown in FIG. 8, and inserted in the slots 61 to guide the elevation movement of the first elevation member 54 and place the first elevation member 54 vertically.

The elevation guide pin 62 is coupled by a bolt 70 of FIG. 8 via a washer 63 of FIG. 8 to prevent the elevation guide pin 62 from being separated from the slot 61, so that the first elevation member 54 is supported by the washer 63.

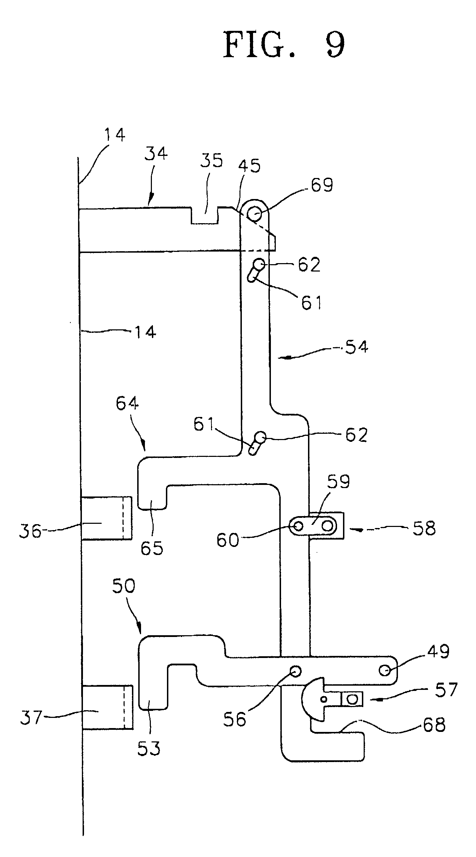

The idle pin 69 is provided at the upper portion of the first elevation member 54. The idle pin 69 is a cylindrical pin capable of rotating with respect to the first elevation member 54 and provided at a position corresponding to the fixed hook 34. That is, as shown in FIG. 9, the idle pin 69 is disposed such that, as the door 14 approaches the first elevation member 54, the inclined surface 45 of the fixed hook 34 can push the idle pin 69 upward.

Also, the elevation hook 64 is integrally formed by horizontally extending from the middle portion of the first elevation member 54 and bent downward. The elevation hook 64 elevates together with the first elevation member 54. The leading portion of the elevation hook 64 bent downward is an insertion portion 65 to be inserted in the catching member 36 installed at one side of the door 14.

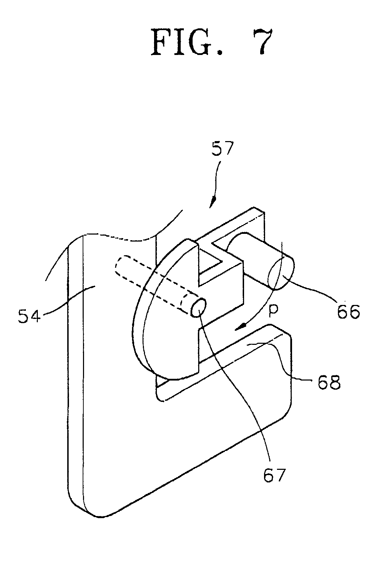

A hook surface 68 of FIG. 7 is formed at the lower portion of the first elevation member 54. The hook surface 68 is a hooking step provided at the lower end of the first elevation member 54 and caught by a stopper 66 of FIG. 7 to be described later to prevent the first elevation member 54 from moving upward.

The first pivot hook 50 provided at the lower portion of the first elevation member 54 has a middle portion connected to the first elevation member 54 by a connection pin 56 so that it can rotate with respect to the first elevation member 54. The leading end portion of the first pivot hook 50 is extended toward the door 14 and bent downward. The bent portion is the insertion portion 53 inserted into the insertion member 37. Also, the rear end portion of the first pivot hook 50 is coupled to one end portion of a shaft 49.

Both ends of the shaft 49 are coupled to the first and second pivot hooks 50 and 51 and installed at a rear wall 48 of the case 12 to be capable of rotating. The shaft 49 is disposed horizontally in the case 12.

In the meantime, the second elevation member 55 is supported at the other side wall 47 of the case 12 and has the same shape as that of the first elevation member 54, except for the hook surface 68. The second pivot hook 51 provided at the lower portion of the second elevation member 55 has the same operation and function as those of the first pivot hook 50.

As described above, the shaft 49 supported horizontally at the rear wall 48 have both ends coupled to the first and second pivot hooks 50 and 51. Thus, when the first pivot hook 50 pivots in a direction indicated by an arrow m, the shaft 49 transfers a pivot force to the second pivot hook 51 so that the second pivot hook 51 pivots in the direction **m**. When the second pivot hook 51 pivots in the direction m, the second elevation member 55 moved upward and the insertion portion 65 ascends accordingly.

The opening unit 58 moves the first elevation member 54 upward and is located at the side of the first elevation member 54. The opening unit 58 is supported at the side wall 46 of the case 12 and includes a key insertion portion 72 where a key groove (not shown) is formed inside and a rotary link 59 fixed to the key insertion portion 72 and rotating by the rotation of the key insertion portion 72. The key insertion portion 72 having a cylindrical shape is rotated by inserting and rotating a key.

An end portion of the rotary link 59 is connected to the first elevation member 54 by a pin 60. Thus, when the key insertion portion 72 is rotated, rotational torque of the key insertion portion 72 is delivered to the rotary link 59 and thus the first elevation member 54 connected to the rotary link 59 by the pin 60 can move up and down.

A locking unit 57 is installed at the lower portion of the opening unit 58. The locking unit 57 is operated by a key outside the case 12 like the opening unit 58. The locking unit 57 is rotated above the hook surface 68 and has the stopper 66 of FIG. 7. The locking unit 57 will be described in detail later with reference to FIG. 7.

Meanwhile, the catching member 36 is disposed in front of each elevation hook 64 and another insertion member 37 is disposed in front of each of the first and second pivot hooks 50 and 51.

FIG. 7 is a view for explaining the locking means of FIG. 4. As shown in the drawing, the locking unit 57 includes a key insertion portion 67 and the stopper 66 connected to the key insertion portion 67 and separated a predetermined distance from the key insertion portion 67. The key insertion portion 67 is supported at the side wall 46 to be capable of rotating and has a key insertion hole (not shown) formed therein. The key insertion portion 67 is rotated by inserting a key into the key insertion hole.

Thus, when a key is inserted into the key insertion hole and rotated, the stopper 66 rotates in a direction indicated by an arrow **p** and contacts the hook surface 68. When the stopper 66 contacts the hook surface 68, the first elevation member 54 is prevented from ascending.

FIG. 8 is a sectional view taken along line VIII-VIII of FIG. 6. Referring to the drawing, an elevation guide pin 62 is fixed at the upper and lower portions of the side wall 46 of the case 12. The elevation guide pin 62 is inserted in the slot 61 formed in the first elevation member 54. Also, the elevation guide pin 62 is disposed at the upper portion of the slot 61 due to the weight of the first elevation member 54.

The washer 63 and the bolt 70 are provided at the end portion of each of the elevation guide pin 62. The washer 63 is supported by the bolt 70 toward the elevation guide pin 62 so that the first elevation member 54 is not separated from the elevation guide pin 62.

Also, the idle pin 69 is provided at the upper end portion of the first elevation member 54. The idle pin 69 can rotate with respect to the first elevation member 54 and is pushed upward as the fixed hook 34 of FIG. 6 contacts the lower portion of the idle pin 69 and proceeds further, so that the entire first elevation member 54 is moved upward.

FIGS. 9, 10, 11, and 12 show the coupling mechanism of the door with respect to the cabinet of the case having a double locking mechanism according to a preferred embodiment of the present invention. Since the first and second elevation members are operated in the same way, the above drawings show the first elevation member only.

FIG. 9 shows a step in which the door 14 approaches the case 12 and the fixed hook 34 provided at the door 14 pushes the idle pin 69 upward. Since the inclined surface 45 is formed at the leading end portion of the fixed hook 34, as the door 14 approaches the case 12, the inclined surface 45 enters the lower portion of the idle pin 69 so that the first elevation member 54 can be moved upward.

As described above, it can be seen that the locking unit 57 is open and the opening unit 58 does not perform any special action.

While the inclined surface 45 of the fixed hook 34 contacts the idle pin 69, the catching member 36 is disposed in front of the elevation hook 64 and the catching member 37 is disposed in front of the first pivot hook 50. Here, it is obvious that the catching member 37 is disposed in front of the second pivot hook 51 of FIG. 6.

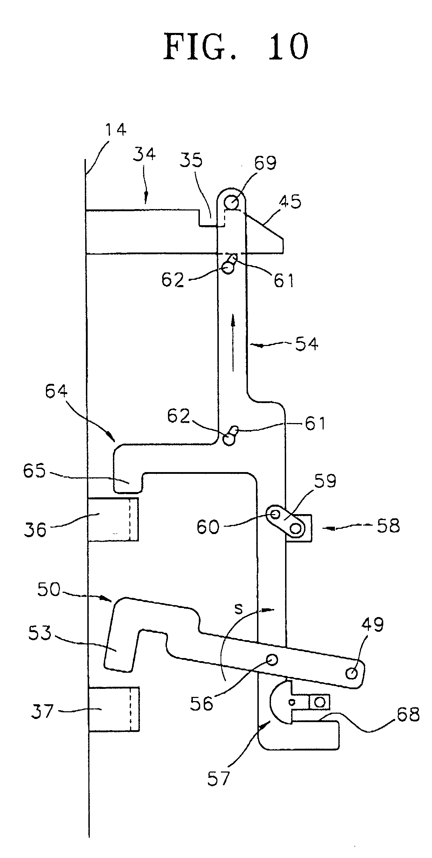

In the above state, when the door 14 is further moved toward the case 12 as shown in FIG. 10, the idle pin 69 ascends vertically along the inclined surface 45 so that the first elevation member 54 ascends. As the first elevation member 54 ascends, the elevation guide pin 62 in each slot 61 is moved downward to guide the vertical movement of the first elevation member 54.

Also, as the first elevation member 54 ascends, the elevation hook 64 ascends and the first pivot hook 50 pivots in a direction indicated by an arrow s, so that the insertion portion 53 of the leading end of the first pivot hook 50 ascends. Simultaneously, the catching members 36 and 37 are located under the insertion portion 65 of the elevation hook 64 and the insertion portion 53 of the first pivot hook 50, respectively. It can be seen that the rotary link 59 connected by the pin 60 to the first elevation member 54 pivots.

Next, as shown in FIG. 11, when the door 14 is continuously pushed close to the case 12, the idle pin 69 moves toward the hook groove 35 from the inclined surface 45 and is inserted into the hook groove 35. Accordingly, the first elevation member 54 is moved downward. As the first elevation member 54 descends, the insertion portion 65 of the elevation hook 64 is inserted into the catching member 36, making a coupling. The insertion portion 53 of the first pivot hook 50 is inserted into the catching member 37.

As a result, the door 14 is coupled to the case 12 by a total of six places of the four catching members 36 and 37 and both fixed hooks 34.

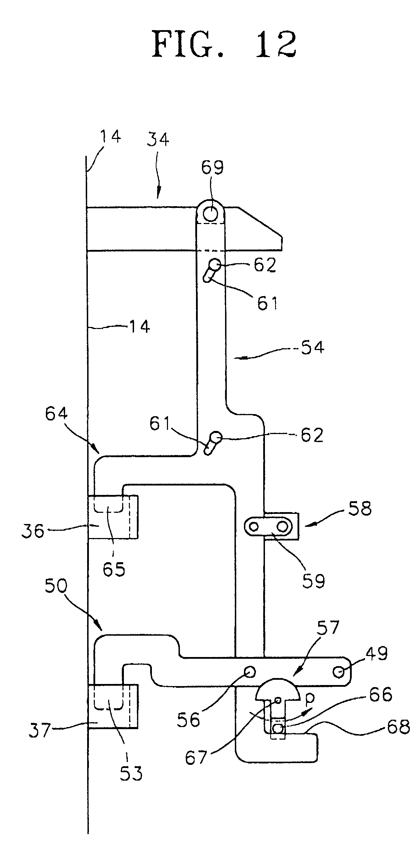

When the door 14 is locked with respect to the case 12 through the above steps, as shown in FIG. 12, the locking unit 57 is rotated so that the stopper 66 is located on the hook surface 68, thus completing the locking. Here, the stopper 66 and the key insertion portion 67 are disposed vertically on and above the hook surface 68. The position of the locking unit 57 can be sufficiently adjusted by providing an arbitrary auxiliary stopper (not shown).

As described above, when the stopper 66 is located on the hook surface 68, even when the rotary link 59 of the opening unit 58 is strongly rotated, the first elevation member 54 is not moved upward.

In the meantime, a process to open the door 14 locked to the case 12 is described as follows.

First, a key (not shown) for opening is inserted into the key insertion portion 67 of the locking unit 57 and the stopper 66 is rotated in the direction **p** of FIG. 12 to be positioned as shown in FIG. 11, to provide an allowance so that the first elevation member 54 ascends.

In the state of the locking unit 57 being unlocked, when the rotary link 59 is rotated in a direction indicated by an arrow r by inserting the key into the opening unit 58, the rotational torque of the key is transferred to the first elevation member 54 through the rotary link 59. The first elevation member 54 guided by the elevation guide pin 62 ascends, as shown in FIG. 12. Here, it is obvious that the first and second elevation members 54 and 55 ascend simultaneously.

This is made possible because the rear end portions of the first and second pivot hooks 50 and 51 are fixed to the shaft 49. That is, when the first elevation member 54 ascends, the first pivot hook 50 rotates, as shown in FIG. 10, and the shaft 49 at the rear end portion of the first pivot hook 50 rotates. The rotational torque of the shaft 49 is transferred to the second pivot hook 51 to rotate the second pivot hook 51 upward. Accordingly, the second elevation member 55 ascends.

Consequently, the first and second elevation members 54 and 55 ascend by the rotation of the rotary link 59, and simultaneously, the idle pin 69 escape from the hook groove 35 and the insertion portions 53 and 65 are separated from the catching members 37 and 36. If the key rotating the rotary link 59 is released in this state, the above elements return to the positions shown in FIG. 11.

In the state shown in FIG. 10, when the door 14 is separated from the case 12 and the key transferring the torque to the rotary link 59 is pulled back, as shown in FIG. 9, the door 14 is completely separated from the case 12 and the first and second elevation members 54 and 55 are moved due to the weight thereof to the original positions.

As a result, in the present invention, to couple the door 14 to the case 12, the door 14 is first coupled to the ejection portion 18. In contrast, to open the door 14 from the ejection portion 18, the door 14 is first separated from the case 12.

Also, the coupling of the door 14 with respect to the ejection portion 18 and the case 12 is made by simply pressing the door 14 against the ejection portion 18 and the case 12. In contrast, to open the door 14 from the ejection portion 18 and the case 12, the stopper 66 of the locking unit 57 is separated from the hook surface 68 and the rotary link 59 of the opening unit 58 is rotated and the connection rod 32 is moved downward by using the handle 33.

While this invention has been particularly shown and described with reference to preferred embodiments thereof, it will be understood by those skilled in the art that various changes in form and details may be made therein without departing from the spirit and scope of the invention as defined by the appended claims.

As described above, in the cabinet having a double locking mechanism according to the present invention, the cabinet has the case, the ejection portion installed capable of being ejected from the inside of the case and on which various devices can be mounted, and the door sealing the case. Also, the door can be locked to the ejection portion and the door locked to the ejection portion is locked to the case. Thus, since the case can only be opened by an authorized person, the cabinet is safe.

## Claims

1. A cabinet having a double locking mechanism comprising:
a case (12) having a space portion (16) therein, in which one side portion thereof is open to the outside;
an elevation portion (54,55) installed at side walls in the case facing each other and having at least one hook unit (50,51) provided thereon;
an opening unit (58) for moving the elevation portion (54,55) upward;
a locking unit (57) for preventing the upward movement of the elevation portion (54,55);
an ejection portion (18) accommodated in the case to be capable of ejection from the case by way of a sliding movement; and
a door (14) hinge-coupled to the ejection portion (18) for covering a front surface of the ejection portion (18), the door (14) sealing the case when moved towards the case together with the ejection portion (18) and having a catching member (37) provided on the inner surface thereof for coupling to the hook unit (50,51).

2. The cabinet as claimed in claim 1, wherein the elevation portion comprises a first elevation member supported at one side wall and disposed vertically in the case and a second elevation member supported at the other side wall parallel to the first elevation member and elevating concurrently with the first elevation member,
the hook unit is an elevation hook extending from each of the first and second elevation members toward the door and then bent downward,
first and second pivot hooks are provided at the lower portions of the respective elevation hooks, the first and second pivot hooks having middle portions pin-coupled to the first and second elevation members to be capable of rotating with respect to the first and second elevation members, rear end portions extending toward a rear wall of the case, and leading end portions extending toward the door and then bent downward, and
the rear end portions of the first and second pivot hooks coupled to both ends of a shaft supported at the rear wall to be capable of rotating so that a pivot torque of the first pivot hook is transferred to the second pivot hook.

3. The cabinet as claimed in claim 2, wherein the opening unit converts a torque generated by rotating a key inserted from the outside of the case to a vertical movement of the first elevation member, the opening unit comprising a key insertion portion fixed at one side wall of the case and rotating around an axis when a key is inserted into a key hole formed therein from the outside of the case, and a rotary link fixed to the key insertion portion, pin-coupled to the first elevation member, and rotating circularly according to the rotation of the key insertion portion.

4. The cabinet as claimed in claim 2, wherein the locking unit prevents upward movement of the first elevation member by being rotated by a rotational force generated as a key inserted from the outside of the case is rotated, the locking unit comprising a key insertion portion rotatably supported at one side wall of the case corresponding to a path along which the first elevation member moved upward and having a key hole formed therein, a stopper rotating circularly by the rotation of the key insertion portion, separated a predetermined distance from the key insertion portion, and preventing the first elevation member from moving upward by hooking the first elevation member.

5. The cabinet as claimed in any preceding claim, wherein guide rails are provided at the upper and lower portions of both side walls of the case parallel to each other,
the ejection portion comprises a lower flat plate contacting the inner surface of the door to be capable of sliding horizontally by being guide by the lower guide rail 24, an upper flat plate parallel to the lower flat plate and contacting the inner surface of the door to be capable of sliding horizontally by being guided by the upper guide rail, and a vertical frame fixing and supporting the upper and lower flat plates parallel to each other,
the upper and lower flat plates have a installation space formed by cutting a predetermined width and length from the leading end portion toward the rear side of the respective upper and lower flat plates and a hook rod is installed horizontally in each of the installation space, and
an elastic hook coupled to the hook rod when the door is pressed against the ejection portion is installed at the inner surface of the door corresponding to each of the hook rods, and a connection rod controlling the elastic hook is connected to the upper and lower elastic hooks and so that the elastic hooks coupled to the hook rods are simultaneously separated from the hook rods.

6. The cabinet as claimed in claim 5, wherein the elastic hook comprises a hook housing fixed at the inner wall of the door corresponding to the hook rod, a hook member installed in the hook housing having an inclined surface formed at the leading end portion which is pressed by the hook rod when approaching the hook rod and a hook groove formed in the upper surface into which the hook rod passing along the inclined surface is inserted, and an elastic unit for elastically supporting the leading end portion of the hook member upward, and the connection rod is pin-coupled to the hook member corresponding to the rear side of the hook groove.

7. The cabinet as claimed in claim 6, wherein the rear end portion of the hook member is pin-coupled by a support shaft to the hook housing, and the elastic unit is a spring wound around the support shaft and having one end supported at the inner wall of the upper portion of the hook housing and the other end pushing a bottom surface of the hook member toward the leading end portion to elastically press the leading end portion upward.

8. The cabinet as claimed in any one of claims 2 to 7, wherein at least one slot is formed in each of the first and second elevation members to guide the elevational movement of the first and second elevation members, an elevation guide pin inserted in each of the slots is fixed at both inner side walls of the case, and an idle pin is horizontally provided at the upper end portion of the first and second elevation members.

9. The cabinet as claimed in claim 8, wherein a fixed hook is provided at the inner surface of the door, which comprises an inclined surface to ascend the idle pin when the fixed hook enters under the idle pin, and a hook groove for accommodating the idle pin passing the inclined surface.

10. The cabinet as claimed in claim 9, wherein catching members are formed on the inner surface of the door, into which the elevation hooks of the first and second elevation members and the insertion portions of the first and second pivot hooks raised as the inclined surface of the fixed hook moves the idle pin upward are inserted.
